# EUROPEAN PATENT APPLICATION

(11) **EP 4 236 436 A1**
(43) Date of publication of application: **30.08.2023**
(21) Application number: 21882009.0
(22) Date of filing: 19.10.2021
(51) Int. Cl.: H04W 24/10

(54) **BEAM REPORTING METHOD, BEAM INFORMATION DETERMINATION METHOD AND RELATED DEVICE**

(30) Priority: 20.10.2020 CN 202011126498
(71) Applicant: Vivo Mobile Communication Co., Ltd., Dongguan, Guangdong 523863 (CN)
(72) Inventor: YANG, Ang, Dongguan, Guangdong 523863 (CN)
(74) Representative: Murgitroyd & Company
(86) International application number: PCT/CN2021/124745
(87) International publication number: WO 2022/083593

(57) **Abstract**

This application discloses a beam reporting method, a beam information determining method, and a related device. The method includes: performing beam measurement according to a beam measurement configuration to obtain a beam measurement result; inputting the beam measurement result into an artificial intelligence AI network to obtain N pieces of first information, where N is a positive integer; and sending a first beam measurement report to a second device, where the first beam measurement report includes the N pieces of first information, and the first information is used to determine beam information.

## Description

### CROSS-REFERENCE TO RELATED APPLICATION

This application claims priority to Chinese Patent Application No.202011126498.8, filed on October 20, 2020 in China, which is incorporated herein by reference in its entirety.

### TECHNICAL FIELD

This application pertains to the field of communications technologies, and in particular, relates to a beam reporting method, a beam information determining method, and a related device.

### BACKGROUND

In a communications system, after performing beam measurement, a terminal needs to send a beam measurement report to a network device. Generally, the terminal can report specified broadband beam information only according to a configuration of the network device, for example, a reference signal (Reference Signal, RS) identifier corresponding to a feedback beam and beam quality corresponding to the RS identifier, and consequently flexibility of beam reporting of the terminal is poor.

### SUMMARY

Embodiments of this application provide a beam reporting method, a beam information determining method, and a related device, to resolve a problem of relatively poor flexibility of beam reporting.

According to a first aspect, a beam reporting method is provided, performed by a first device and including:
performing beam measurement according to a beam measurement configuration to obtain a beam measurement result;
inputting the beam measurement result into an artificial intelligence AI network to obtain N pieces of first information, where N is a positive integer; and
sending a first beam measurement report to a second device, where the first beam measurement report includes the N pieces of first information, and the first information is used to determine beam information.

According to a second aspect, a beam information determining method is provided, performed by a second device and including:
receiving a first beam measurement report, where the first beam measurement report includes N pieces of first information, and N is a positive integer; and
inputting the N pieces of first information into an artificial intelligence AI network to obtain beam information.

According to a third aspect, a beam reporting apparatus is provided, including:
a measurement module, configured to perform beam measurement according to a beam measurement configuration to obtain a beam measurement result;
a first input module, configured to input the beam measurement result into an artificial intelligence AI network to obtain N pieces of first information, where N is a positive integer; and
a first sending module, configured to send a first beam measurement report to a second device, where the first beam measurement report includes the N pieces of first information, and the first information is used to determine beam information.

According to a fourth aspect, a beam information determining apparatus is provided, including:
a receiving module, configured to receive a first beam measurement report, where the first beam measurement report includes N pieces of first information, and N is a positive integer; and
a second input module, configured to input the N pieces of first information into an artificial intelligence AI network to obtain beam information.

According to a fifth aspect, a terminal is provided. The terminal includes a processor, a memory, and a program or an instruction that is stored in the memory and executable on the processor, where the program or the instruction is executed by the processor to implement the steps of the method in the first aspect or the steps of the method in the second aspect.

According to a sixth aspect, a network device is provided. The network device includes a processor, a memory, and a program or an instruction that is stored in the memory and executable on the processor, where the program or the instruction is executed by the processor to implement the steps of the method in the first aspect or the steps of the method in the second aspect.

According to a seventh aspect, a readable storage medium is provided. The readable storage medium stores a program or an instruction, and the program or the instruction is executed by a processor to implement the steps of the method in the first aspect or the steps of the method in the second aspect.

According to an eight aspect, an embodiment of this application provides a chip. The chip includes a processor and a communications interface, the communications interface is coupled to the processor, and the processor is configured to run a program or an instruction of a network device to implement the steps of the method in the first aspect or the steps of the method in the second aspect.

According to a ninth aspect, a computer program product is provided. The computer program product is stored in a non-volatile storage medium, and the computer program product is executed by at least one processor to implement the steps of the method in the first aspect or the steps of the method in the second aspect.

According to the embodiments of this application, beam measurement is performed according to a beam measurement configuration to obtain a beam measurement result; the beam measurement result is input into an artificial intelligence AI network to obtain N pieces of first information; and a first beam measurement report is sent to a second device, where the first beam measurement report includes the N pieces of first information, and the first information is used to determine beam information. Because the reported first information is obtained by using the AI network, different beam reporting can be implemented by adjusting the AI network, thereby improving flexibility of beam reporting.

### BRIEF DESCRIPTION OF DRAWINGS

FIG. 1 is a structural diagram of a network system to which the embodiments of this application can be applied;
FIG. 2 is a schematic diagram of a neuron of a neural network;
FIG. 3 is a flowchart of a beam reporting method according to an embodiment of this application;
FIG. 4 is a flowchart of a beam information determining method according to an embodiment of this application;
FIG. 5 is a structural diagram of a beam reporting apparatus according to an embodiment of this application;
FIG. 6 is a structural diagram of a beam information determining apparatus according to an embodiment of this application;
FIG. 7 is a structural diagram of a communications device according to an embodiment of this application;
FIG. 8 is a structural diagram of a terminal according to an embodiment of this application; and
FIG. 9 is a structural diagram of a network device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

In the specification and claims of this application, the terms "first", "second", and the like are intended to distinguish between similar objects but do not describe a specific order or sequence. It should be understood that, data termed in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communications systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. However, the following descriptions describe a new radio (New Radio, NR) system for example purposes, and NR terms are used in most of the following descriptions, although these technologies can also be applied to an application other than an NR system application, for example, a 6^{th} generation (6^{th} Generation, 6G) communications system.

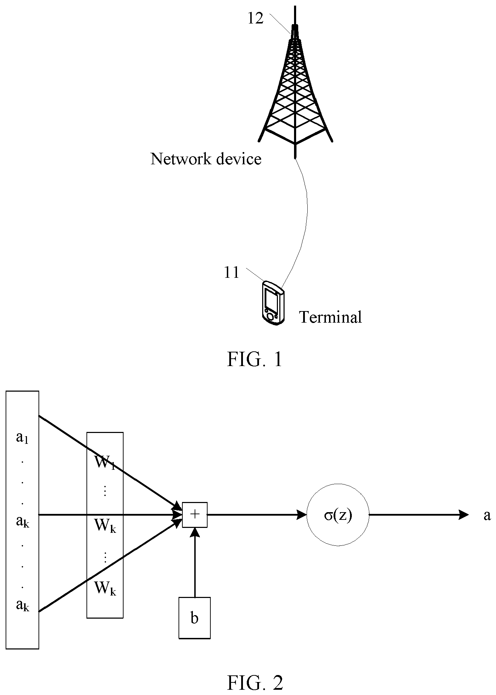

FIG. 1 is a block diagram of a wireless communications system to which embodiments of this application can be applied. The wireless communications system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicle user equipment (VUE), or pedestrian user equipment (PUE). The wearable device includes a bracelet, a headset, glasses, and the like. It should be noted that a specific type of the terminal 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

For ease of understanding, the following describes some content in the embodiments of this application.

### 1. Multi-antenna

Wireless access technology standards such as LTE/LTE-A are built based on multi input multi output (Multi Input Multi Output, MIMO) and orthogonal frequency division multiplexing (Orthogonal Frequency Division Multiplexing, OFDM) technologies. In the MIMO technology, a peak rate and system spectrum utilization are improved by using a spatial degree of freedom that can be obtained by a multi-antenna system.

In a standardization development process, dimensions of the MIMO technology are continuously expanded, and a maximum of a plurality of layers of MIMO transmission can be supported. In an enhanced multi user (Multi User MIMO, MU-MIMO) technology, a maximum of four downlink data layers can be supported in MU-MIMO transmission of a transmission mode (Transmission Mode, TM)-8. A transmission capability of a single user (Single-User MIMO, SU-MIMO) may be extended to a maximum of eight data layers.

In a massive (Massive) MIMO technology, a massive antenna array is used, which can greatly improve system frequency band utilization and support more access users.

In the massive MIMO technology, if an all-digital array is used, maximum spatial resolution and optimal MU-MIMO performance can be achieved. However, this structure requires a large number of analog-to-digital signal conversion (AD)/digital-to-analog signal conversion (DA) devices and a large number of complete radio frequency-baseband processing channels, which will be a huge burden both in terms of device costs and baseband processing complexity.

To avoid the foregoing implementation costs and device complexity, a digital-to-analog hybrid beamforming technology emerges, that is, level-1 beamforming is added to a radio frequency signal on a basis of conventional digital domain beamforming near a front end of an antenna system. In a relatively simple manner, analog shaping enables a signal to be sent and a channel to be roughly matched. A dimension of an equivalent channel formed after analog shaping is less than the actual number of antennas. Therefore, the AD/DA conversion component, the number of digital channels, and corresponding baseband processing complexity that are subsequently required can be greatly reduced. Residual interference in analog shaping can be processed again in the digital domain, to ensure quality of MU-MIMO transmission. Compared with full digital beamforming, digital-to-analog hybrid beamforming is a compromise solution between performance and complexity, and has a relatively high practical prospect in a system with a large bandwidth or a large number of antennas in a high frequency band.

### 2. High frequency band

In a research on a next-generation communications system later than 4G, an operating frequency band supported by the system is increased to 6 GHz or more, up to about 100 GHz. The high frequency band has relatively rich idle frequency resources, and may provide a larger throughput for data transmission. At present, modeling of a high frequency channel has been completed in 3GPP. A wavelength of a high frequency signal is short. Compared with a low frequency band, more antenna array elements can be disposed on a panel of a same size, and a beam with stronger directivity and narrower lobe can be formed by using the beamforming technology. Therefore, the massive antenna technology needs to be combined with high-frequency communication.

### 3. Beam measurement and reporting (beam measurement and beam reporting)

Analog beamforming is transmission in full bandwidth, and each polarization direction array element on a panel of each high-frequency antenna array can only send an analog beam through time division multiplexing. A weighting value of the analog beam is implemented by adjusting a parameter of a device such as a radio frequency front-end phase shifter.

Currently, training of an analog beamforming vector is generally performed in a polling manner, that is, an array element in each polarization direction of each antenna panel sequentially sends a training signal, that is, a candidate beamforming vector, at a specified time through time division multiplexing. After measurement, a terminal feeds back a beam report, so that a network side uses the training signal to implement analog beam transmission during a next time of service transmission. Content of the beam report generally includes several optimal transmit beam identifiers and measured receive power of each transmit beam.

During beam measurement, the network configures a reference signal resource set (RS resource set), including at least one reference signal resource, such as a synchronization signal block (Synchronization Signal and PBCH block, SSB) resource or a channel state information reference signal (Channel State Information Reference Signal, CSI-RS) resource. The UE measures a layer 1 reference signal received power (Layer 1 reference signal received power, Ll-RSRP)/a layer 1 signal to interference plus noise ratio (Layer 1 Signal to Interference plus Noise Ratio, Ll-SINR) of each RS resource, and reports at least one optimal measurement result to the network. Reported content includes an SSB resource indicator (resource indicator, RI) or a channel state information reference signal resource indicator (CSI-RS resource indicator, CRI) and an L1-RSRP/L1-SINR. The reported content reflects at least one optimal beam and its quality for the network to determine a beam used to transmit a channel or a signal to the UE.

Optionally, the reference signal resource may be understood as a reference signal.

### 4. Beam indication (beam indication) mechanism

After beam measurement and beam reporting are performed, the network may perform beam indication on downlink and uplink channels or reference signals, to establish a beam link between the network and the UE to implement transmission of the channels or reference signals.

For a beam indication of a physical downlink control channel (Physical Downlink Control Channel, PDCCH), the network configures K transmission configuration indication (Transmission Configuration Indication, TCI) states (state) for each control resource set (control resource set, CORESET) by using radio resource control (Radio Resource Control, RRC) signaling. When K>1, a media access control control element (Media Access Control Control Element, MAC CE) instructs or activates one TCI state, and when K=1, no additional MAC CE command is required. When monitoring the PDCCH, the UE monitors the PDCCH by using same quasi co-location (Quasi-colocation, QCL) information for all search spaces (search space) in the CORESET, that is, a same TCI state is used. A reference signal (reference Signal) (for example, a period CSI-RS resource, a semi-persistent CSI-RS resource, or an SS block) and a UE-specific (UE-specific) PDCCH demodulation reference signal (Demodulation Reference Signal, DMRS) port in the TCI state are spatial QCL. The UE may learn, according to the TCI state, which receive beam is used to receive the PDCCH.

For a beam indication of a PDSCH, the network configures M TCI states by using RRC signaling, then activates 2N TCI states by using a MAC CE command, and then notifies a TCI state by using an N-bit TCI field (field) of downlink control information (Downlink Control Information, DCI), where a reference signal in the TCI state and a DMRS port of the PDSCH to be scheduled are QCL. The UE may learn, according to the TCI state, which receive beam is used to receive a physical downlink shared channel (Physical Downlink Shared Channel, PDSCH). The reference signal in the TCI state may be a periodic CSI-RS resource, a semi-persistent CSI-RS resource, an SSB, or the like.

For a beam indication of a CSI-RS, when a CSI-RS type is a periodic CSI-RS, the network configures QCL information for a CSI-RS resource by using RRC signaling. When the CSI-RS type is a semi-persistent CSI- RS, the network activates a CSI-RS resource from an RRC configured CSI-RS resource set by using a MAC CE command, to indicate its QCL information. When the CSI-RS type is an aperiodic CSI-RS, the network configures QCL for the CSI-RS resource by using RRC signaling, and triggers the CSI-RS by using DCI.

For a beam indication of a physical uplink control channel (Physical Uplink Control Channel, PUCCH), the network configures spatial relation information (spatial relation information) for each PUCCH resource by using RRC signaling and a parameter PUCCH-SpatialRelationInfo, and when a plurality of pieces of spatial relation information are configured for the PUCCH resource, one of the plurality of pieces of spatial relation information is indicated or activated by using a MAC-CE. When only one piece of spatial relation information is configured for the PUCCH resource, no additional MAC CE command is required.

For a beam indication of a physical uplink shared channel (Physical Uplink Shared Channel, PUSCH), spatial relation information of the PUSCH is used when DCI carried by a PDCCH schedules the PUSCH, each SRI codepoint (codepoint) of an SRI field in the DCI indicates one SRI, and the SRI is used to indicate spatial relation information of the PUSCH.

For a beam indication of an SRS, when an SRS type is a periodic SRS, the network configures spatial relation information for an SRS resource by using RRC signaling. When the SRS type is a semi-persistent SRS, the network activates one piece in a set of RRC configure spatial relation information by using a MAC CE command. When the SRS type is an aperiodic SRS, the network configures spatial relation information for the SRS resource by using RRC signaling.

Optionally, the beam information may be understood as spatial relationship information, spatial domain transmission filter (spatial domain transmission filter) information, spatial filter (spatial filter) information, TCI state information, QCL information, a QCL parameter, and the like.

Downlink beam information may be generally represented by using TCI state information or QCL information. Uplink beam information may be generally represented by using spatial relationship information.

### 5. CSI report configuration

There are a plurality of report quantity (reportQuantity) configuration options in a channel state information report configuration (CSI report setting) "CSI-reportConfig" of RRC signaling. When "reportQuantity" is set to "cri-RSRP", "ssb-Index-RSRP" or "none" and the CSI-RS is not used for a tracking reference signal (tracking reference signal, TRS), it indicates that the CSI report is used for beam measurement. When "reportQuantity" is set to "none" and the CSI-RS is used for a TRS, it indicates that measurement of these CSI-RSs does not need to be reported to a base station. For other setting, normal CSI information reporting is performed.

A parameter "reportConfigType" associated with a time domain characteristic of a CSI report may be configured as "periodic", "semiPersistentOnPUCCH", "semiPersistentOnPUSCH", "aperiodic", respectively corresponding to a periodic CSI report, a PUCCH-based semi-persistent CSI report, a PUSCH-based semi-persistent CSI report, and an aperiodic CSI report.

In addition, the periodic CSI report and the semi-persistent CSI report are configured with a report period and a slot offset.

A CSI report configuration is associated with a CSI resource configuration (CSI resource setting) "CSI-ResourceConfig" of a CSI-RS resource set (CSI-RS resource set) or an SSB resource set (SSB resource set) used to configure beam management measurement. In a resource configuration of the CSI-RS, there is also a parameter "resourceType" related to a time domain characteristic sent by the CSI-RS, and a value may be periodic, semi-persistent, or aperiodic. It should be noted that a periodic CSI report can only be associated with a periodic CSI-RS, a semi-persistent CSI report can be associated with a periodic or semi-persistent CSI-RS, and a aperiodic CSI report can be associated with a periodic, semi-persistent, or aperiodic CSI-RS. Optionally, any CSI report may be associated with an SSB.

Currently, a configuration of a CSI-RS-based beam management P-3 process is as follows: "reportQuantity" in the CSI report configuration is set to "none". A non-zero power CSI-RS resource set "NZP-CSI-RS-ResourceSet" configuration associated with a CSI resource configuration is enabled repeatedly. TRS information CSI-RS is not used for a tracking reference signal.

When groupBasedBeamReporting of a CSI report is set to "enable", it indicates that the UE may simultaneously receive a plurality of RSs in the CSI report by using a single spatial domain filter (a single spatial domain receive filter) or multiple parallel spatial domain filters (multiple simultaneous spatial domain receive filters).

### 6. Neural network

The neural network may be understood as an artificial intelligence (artificial intelligence, AI) network, and the neural network includes a neuron. A schematic diagram of the neural network is shown in FIG. 2, where a₁, a₂,... and a_{K} are inputs, w is a weight value, b is an offset, and σ (z) is an activation function. Activation functions commonly used include Sigmoid, tanh, a rectified linear unit (Rectified Linear Unit, ReLU), and the like, where z = *a*₁*w*₁ + ··· + *aₖwₖ* + ··· + *a_{K}w_{K}* + *b*

Parameters of the neural network are optimized by using an optimization algorithm. The optimization algorithm is an algorithm that can help minimize or maximize an objective function. The objective function may also be referred to as a loss function. The objective function is often a mathematical combination of a model parameter and data. For example, given data X and a corresponding label Y, a neural network model f (.) is constructed. After the model is constructed, a predicted output f(x) can be obtained according to the input X, and a difference (f(x)-Y) between a predicted value and a real value can be calculated. This is a loss function. When appropriate w and b are found, a loss value of the foregoing loss function reaches a minimum. A smaller loss value indicates that the output of the model is closer to a real case.

Currently, common optimization algorithms are basically based on an error back propagation (error Back Propagation, BP) algorithm. A basic idea of the BP algorithm is that a learning process consists of signal forward propagation and error back propagation. During forward propagation, an input sample is transferred from an input layer to an output layer after being processed by each hidden layer. If an actual output of the output layer does not match an expected output, error back propagation is performed. Error back propagation is to transmit an output error layer by layer to the input layer through a hidden layer in some form for back propagation, and allocate the error to all units of each layer, to obtain an error signal of a unit at each layer. This error signal is used as a basis for correcting a weight of each unit. A weight adjustment process of each layer during signal forward propagation and error back propagation is carried out repeatedly. A process of continuously adjusting a weight is a learning and training process of the network. This process continues until errors output by the network are reduced to an acceptable level or until a preset quantity of learning times is performed.

Common optimization algorithms include gradient descent (Gradient Descent), stochastic gradient descent (Stochastic Gradient Descent, SGD), mini-batch gradient descent (mini-batch gradient descent), momentum (Momentum), stochastic gradient descent with momentum (Nesterov), adaptive gradient descent (Adaptive Gradient descent, Adagrad), Adadelta, root mean square prop (root mean square prop, RMSprop), and adaptive moment estimation (Adaptive Moment Estimation, Adam).

During error back propagation, in these optimization algorithms, an error/loss is obtained according to the loss function, a gradient is obtained by calculating a derivative/bias derivative of a current neuron, and adding an effect such as a learning rate and a previous gradient/derivative/bias derivative, and the gradient is transferred to an upper layer.

With reference to the accompanying drawings, a beam reporting method provided in the embodiments of this application is described in detail by using specific embodiments and application scenarios.

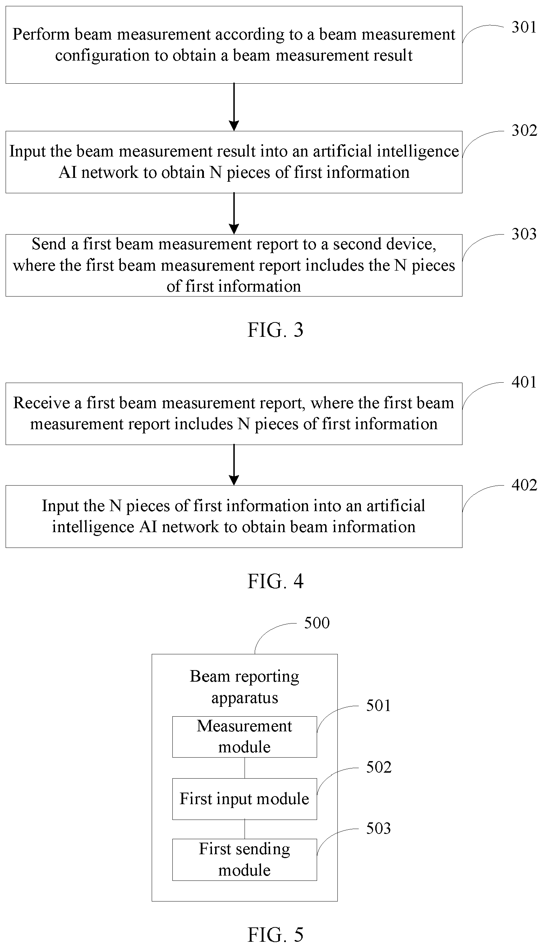

Referring to FIG. 3, FIG. 3 is a flowchart of a beam reporting method according to an embodiment of this application. The method is performed by a first device. As shown in FIG. 3, the method includes the following steps.

Step 301: Perform beam measurement according to a beam measurement configuration to obtain a beam measurement result.

In this embodiment of this application, in the beam reporting method, the first device performs beam measurement, and reports the beam measurement result to a second device. The first device may be understood as a beam receive end, and the second device may be understood as a beam transmit end. One of the first device and the second device may be a network device, and the other is a terminal, or both the first device and the second device may be a terminal. The following uses an example in which the beam reporting method is applied to downlink measurement reporting between a network device and a terminal for description. In this case, the first device is the terminal, and the second device is the network device.

Optionally, the network device may first send the beam measurement configuration, and send, based on the beam measurement configuration, a corresponding reference signal used for beam measurement. After receiving the beam measurement configuration, the terminal may perform beam measurement or the beam measurement result based on the corresponding reference signal according to the beam measurement configuration. The beam measurement may include measurement of at least one of the following: an L1-RSRP, layer 1 reference signal received quality (Layer 1 Reference Signal Received Quality, L1-RSRQ), and an L1-SINR.

The beam measurement result may be beam quality of a reference signal corresponding to each beam, may be reference signal identifiers corresponding to the first L beams that are sorted in descending order of beam quality, or may be reference signal identifiers corresponding to the first L beams that are sorted in descending order of beam quality and corresponding beam quality.

Step 302: Input the beam measurement result into an artificial intelligence AI network to obtain N pieces of first information, where N is a positive integer.

In this embodiment of this application, the beam measurement result may be used as an input of the AI network to obtain the N pieces of first information. Optionally, one or more pieces of first information may be obtained through each input. For example, the N pieces of beam information may be all output results obtained by inputting all beam measurement results into the AI network at one time, or different beam measurement results may be input for N times, to obtain one piece of first information each time.

It should be noted that, in this embodiment of this application, a measurement result is converted by using the AI network to obtain first information to be reported. Certainly, in another embodiment, reporting information may be further obtained based on a non-AI algorithm. For example, the input of the AI network in the first device in this embodiment of this application may be used as an input of the non-AI algorithm, and an output result obtained through calculation by using the non-AI algorithm is used as reporting information. The reporting information may also be used to determine beam information, and the reporting information may be equivalent to the first information, that is, content represented by the reporting information is the same as content represented by the first information.

Step 303: Send a first beam measurement report to a second device, where the first beam measurement report includes the N pieces of first information, and the first information is used to determine beam information.

In this embodiment of this application, after obtaining the N pieces of first information by using the AI network, the first device may report the N pieces of first information to the second device as the first beam measurement report, to implement reporting of beam measurement. After receiving the N pieces of first information, the second device may use the N pieces of beam information as the corresponding input of the AI network to obtain beam information of the current reporting.

In some embodiments, in the second device, one or more pieces of first information may be used as an input of the AI network to obtain beam information. For example, in a case that N is greater than 1, and the input of the AI network in the second device is a plurality of pieces of first information, the N pieces of first information may be input into the AI network by using the AI network only once, to obtain beam information corresponding to the N pieces of first information. For another example, when the input of the AI network in the second device is a single piece of first information, one piece of first information needs to be used as an input each time, and the AI network is used for N times to obtain the beam information corresponding to the N pieces of first information.

According to the embodiments of this application, beam measurement is performed according to a beam measurement configuration to obtain a beam measurement result; the beam measurement result is input into an artificial intelligence AI network to obtain N pieces of first information; and a first beam measurement report is sent to a second device, where the first beam measurement report includes the N pieces of first information, and the first information is used to determine beam information. Because the reported first information is obtained by using the AI network, different beam reporting can be implemented by adjusting the AI network, thereby improving flexibility of beam reporting.

Optionally, in some embodiments, the first beam measurement report further includes at least one of the following: a reference signal RS identifier corresponding to a beam and beam quality corresponding to the RS identifier.

The RS identifier may be understood as a beam identifier, for example, may be represented by using an index or an identifier of an RS. The beam quality may be understood as at least one of an L1-RSRP, L1-RSRQ, and an L1-SINR. Optionally, in some embodiments, different types of beam quality correspond to different AI networks.

Optionally, in some embodiments, the N pieces of first information meet at least one of the following:
in a case that N is equal to 1, the first information is associated with at least one RS identifier; and
in a case that N is greater than 1, each piece of first information is associated with one first RS identifier, where
the at least one RS identifier is any one of the following: at least a part of RS identifiers included in the first beam measurement report, at least a part of RS identifiers included in a beam report configuration, and at least a part of RS identifiers included in the beam measurement configuration; and the first RS identifier is any one of the following: an RS identifier included in the first beam measurement report, an RS identifier included in the beam report configuration, and an RS identifier included in the beam measurement configuration.

In this embodiment of this application, in a case that the at least one RS identifier is a part of RS identifiers included in the first beam measurement report, or a part of RS identifiers included in the beam report configuration, or is a part of RS identifiers included in the beam measurement configuration, the at least one RS identifier may be indicated through a protocol stipulation or the network device. This is not further limited herein. For example, the at least one RS identifier may be the first RS identifier or an RS identifier of a beam with best beam quality included in the first beam measurement report, or may be a minimum RS identifier or a maximum RS identifier or a specially indicated RS identifier in the beam report configuration, or may be a minimum RS identifier or a maximum RS identifier or a specially indicated RS identifier in the beam measurement configuration.

Optionally, in some embodiments, the first information may represent one or more different configurations. For example, the first information is used to represent a target object, and the target object may include at least one of the following:
a first RS identifier;
beam quality corresponding to the first RS identifier;
predicted beam quality;
beam quality corresponding to M second RS identifiers, where the M second RS identifiers are RS identifiers whose corresponding beam quality is not reported, and M is a positive integer;
beam quality of a sub-band; and
stability of beam quality.

The first RS identifier may be understood as an RS identifier corresponding to a currently measured beam, that is, all RS identifiers included in the beam measurement configuration, or may be understood as an RS identifier that currently needs to be reported, that is, an RS identifier included in or associated with a beam measurement report. In this embodiment of this application, when a relatively large quantity of RS identifiers and beam quality corresponding to the RS identifiers need to be reported, the first RS identifier and/or the beam quality corresponding to the first RS identifier may be directly reported by using the first information, thereby reducing an amount of to-be-reported data and reducing resource occupation.

Optionally, in some embodiments, the predicted beam quality includes predicted beam quality of a third RS identifier within a preset time period, and the third RS identifier includes any one of the following:
an RS identifier associated with the first information;
an RS identifier included in the first beam measurement report;
an RS identifier included in a beam configuration;
the first L1 RS identifiers that are sorted in descending order of beam quality in RS identifiers associated with the first information;
the first L1 RS identifiers that are sorted in descending order of beam quality in RS identifiers included in the first beam measurement report; and
the first L1 RS identifiers that are sorted in descending order of beam quality in RS identifiers included in the beam configuration, where
L1 is a positive integer.

In this embodiment of this application, the first information may represent the predicted beam quality of the third RS identifier within the preset time period. That is, the first information may represent prediction of beam quality within a future period of time. A start moment of the preset time period may be set according to an actual requirement, for example, a moment at which the second device receives the beam measurement report, or an end moment at which beam measurement is completed. This is not further limited herein.

In some embodiments, when the third RS identifier is the RS identifier associated with the first information, the first information is used to represent beam quality prediction of the RS identifier associated with the first information. In this case, the third RS identifier may include a part or all of RS identifiers in the RS identifiers associated with the first information. The RS identifier associated with the first information may be understood as an RS identifier included in a beam report, or may be an RS identifier except an RS identifier included in a beam measurement report. For example, when the beam configuration includes an RS identifier 1, an RS identifier 2, and an RS identifier 3, and the beam measurement report includes the RS identifier 2, the RS identifier associated with the first information may be the RS identifier 1 and the RS identifier 3. The beam configuration may be understood as the beam measurement configuration and the beam report configuration, or may be understood as a beam configuration in which an RS identifier associated with the first information is specifically configured. This is not further proudly limited herein. Optionally, when the third RS identifier includes a part of RS identifiers in the RS identifiers associated with the first information, the third RS identifier may be specifically the first L1 RS identifiers that are sorted in descending order of beam quality in the RS identifiers associated with the first information.

In some embodiments, when the third RS identifier is an RS identifier included in the first beam measurement report, the first information is used to represent beam quality prediction of the RS identifier included in the first beam measurement report. In this case, the third identifier may include a part or all of RS identifiers included in the first beam measurement report. In this embodiment of this application, the first beam measurement report may be used to report current beam quality of one or more RS identifiers and beam quality prediction of at least one RS identifier in the reported RS identifiers. Optionally, when the third RS identifier includes a part of RS identifiers included in the first beam measurement report, the third RS identifier may be specifically the first L1 RS identifiers that are sorted in descending order of beam quality in all RS identifiers included in the first beam measurement report.

In some embodiments, when the third RS identifier is an RS identifier included in the beam configuration, the first information is used to represent beam quality prediction of the RS identifier included in the beam configuration. In this case, the third identifier may include a part or all of RS identifiers associated with the beam configuration. The beam configuration may be understood as the beam measurement configuration and the beam report configuration, or may be understood as a beam configuration in which an RS identifier associated with the first information is specifically configured. This is not further proudly limited herein. Optionally, when the third RS identifier includes a part of RS identifiers included in the beam configuration, the third RS identifier may be specifically the first L 1 RS identifiers that are sorted in descending order of beam quality in all RS identifiers included in the beam configuration.

Optionally, in a case that the first beam measurement report and a second beam measurement report meet a preset condition, the third RS identifier includes at least one of the following: a fourth RS identifier, a fifth RS identifier, and a sixth RS identifier, where
the second beam measurement report is a beam measurement report that is closest to the first beam measurement report;
the fourth RS identifier is only associated with first information in a target beam measurement report, and the target beam measurement report is at least one of the first beam measurement report and the second beam measurement report;
the fifth RS identifier is only an RS identifier included in the target beam measurement report, and the target beam measurement report is at least one of the first beam measurement report and the second beam measurement report; and
the sixth RS identifier is only an RS identifier included in a beam configuration corresponding to the target beam measurement report, and the target beam measurement report is at least one of the first beam measurement report and the second beam measurement report.

In this embodiment of this application, the preset condition is used to indicate that at least one of the RS identifier associated with the first information, the RS identifier included in the beam measurement report, and the RS identifier associated with the beam configuration changes. In other words, the preset condition may include at least one of the following:
the RS identifier associated with the first information in the first beam measurement report is different from an RS identifier associated with first information in the second beam measurement report;
the RS identifier included in the first beam measurement report is different from an RS identifier included in the second beam measurement report; and
an RS identifier included in a beam configuration corresponding to the first beam measurement report is different from an RS identifier included in a beam configuration corresponding to the second beam measurement report.

For the fourth RS identifier, it may be understood that the fourth RS identifier is associated with the first information in the first beam measurement report, and is not associated with the first information in the second beam measurement report; or the fourth RS identifier is not associated with the first information in the first beam measurement report, and is associated with the first information in the second beam measurement report; or the fourth RS identifier is associated with the first information in the first beam measurement report, and is associated with the first information in the second beam measurement report.

For the fifth RS identifier, it may be understood as that the fifth RS identifier is an RS identifier included in the first beam measurement report, and is not an RS identifier included in the second beam measurement report; or the fifth RS identifier is not an RS identifier included in the first beam measurement report, and is an RS identifier included in the second beam measurement report, or the fifth RS identifier belongs to both the first beam measurement report and the second beam measurement report.

For the sixth RS identifier, it may be understood that the sixth RS identifier is an RS identifier included in the beam configuration corresponding to the first beam measurement report, and is not an RS identifier included in the beam configuration corresponding to the second beam measurement report; or the sixth RS identifier is not an RS identifier included in the beam configuration corresponding to the first beam measurement report, and is an RS identifier included in the beam configuration corresponding to the second beam measurement report, or the sixth RS identifier belongs to both the beam configuration corresponding to the first beam measurement report and the beam configuration corresponding to the second beam measurement report.

Optionally, in some embodiments, the first information is used to represent beam quality of an RS corresponding to a beam that is not reported, that is, represent the beam quality corresponding to the M second RS identifiers. M may be equal to 1 or greater than 1. In a case that M is greater than 1, the beam quality corresponding to the M second RS identifiers includes any one of the following:
beam quality of each RS identifier in the M second RS identifiers;
average beam quality of all RS identifiers in the M second RS identifiers;
beam quality of each RS identifier in L2 RS identifiers, where the L2 RS identifiers are the first L2 RS identifiers that are sorted in descending order of beam quality in the M second RS identifiers, and L2 is a positive integer;
average beam quality of the L2 RS identifiers;
beam quality of each RS identifier in L3 RS identifiers, where the L3 RS identifiers are the first L3 RS identifiers that are sorted in descending order of beam quality in the M second RS identifiers, beam quality of each RS identifier in the L3 RS identifiers is greater than a first preset threshold, and L3 is a positive integer;
average beam quality of the L3 identifiers;
beam quality of each identifier in at least one target RS identifier; and average beam quality of the at least one target RS identifier.

In some embodiments of this application, the at least one target RS meets at least one of the following:
in a case that beam quality of L4 RS identifiers in the second RS identifier is greater than a second preset threshold, the at least one target RS is the L4 RS identifiers;
in a case that the beam quality of the L4 RS identifiers in the second RS identifier is greater than the second preset threshold, the at least one target RS is the first L5 RS identifiers that are sorted in descending order of beam quality in the L4 RS identifiers; and
in a case that beam quality of any RS identifier in the second RS identifier is less than or equal to the second preset threshold, the at least one target RS is the first L6 RS identifiers that are sorted in descending order of beam quality in the M second RS identifiers, where
L4, L5, and L6 are all positive integers.

Optionally, in some embodiments, the first information may represent beam quality of a sub-band. For example, an output of the AI network in a second network device includes beam quality of each sub-band of a target beam.

Sub-band division includes division based on frequency domain resources, division based on time domain resources, and/or the like. Frequency domain resources may be divided according to a radio bearer (Radio Bearer, RB), a physical resource block (Physical Resource Block, PRB), a sub-band, a precoding resource block group (Precoding Resource block Group, PRG), a bandwidth part (Bandwidth Part, BWP), and the like. Time domain resources may be divided according to a subcarrier, a symbol, a slot, a half-slot, and the like.

Optionally, a division manner of a sub-band and a size of a resource included in the sub-band may be determined in at least one manner such as a protocol default, a network configuration, and terminal reporting.

For example, in some embodiments, one or more division manners may be default in the protocol. When one division manner is default in the protocol, the division manner default in the protocol may be used. If one or more division manners are default in the protocol, one of the division manners may be configured by the network. Further, before the network configuration, the terminal may report one or more division manners.

It should be understood that, the stability may include at least one of the following: time domain stability, frequency domain stability, and spatial domain stability.

The time domain stability is used to indicate stability of beam quality of the beam within a time period or at a current moment. The time period may include at least one of the following:
past K1 first time units, where the first time unit is a beam measurement period, a beam reporting period, a slot, a half-slot, a symbol, or the like; and
future K2 second time units, where the second time unit is a beam measurement period, a beam reporting period, a slot, a half-slot, a symbol, or the like.

Both the past K1 first time units and the future K2 second time units are consecutive time units, and an end moment of the past K1 first time units and a start moment of the future K2 second time units may be a same moment, for example, may be a start moment or an end moment of beam measurement. This is not further limited herein.

The frequency domain stability is used to indicate stability of an available frequency resource, a recently used frequency domain resource, a frequency domain resource indicated by the network side, a frequency domain resource reported by UE, a frequency resource in which an RS of one or more beams is located, or beam quality of the beam.

The spatial domain stability is used to indicate stability of beam quality of one or more beams in space. For example, within a spatial beam angle range, that is, a specified angle deviating from the maximum radiation angle of the beam represents stability of beam quality of the beam.

Optionally, the stability may include a variance, a worst value, a difference between a best value and a worst value, a variation range, a difference between a current value and a limiting value, and a mathematical combination manner of thereof. The mathematical combination manner includes a combination of various common mathematical operations, such as addition, subtraction, multiplication, and division, N power, N square root, a logarithm, a derivative, and a partial derivative. N is any number. For example, N may be a positive number or a negative number or 0, a real number or a complex number.

For example, it is assumed that the above stability includes a difference between a current value and a limiting value in spatial domain. Beam quality of a maximum radiation angle of the target beam is denoted as x1 . If quality of the beam most deviating from the strongest radiation angle within a spatial beam angle range is x2, the difference between the current value and the limiting value in spatial domain is x1-x2.

It is assumed that the stability includes a variation range in time domain. Within a period of time, if best beam quality of the target beam is x1, and worst beam quality is x2, the variation range in time domain is [x2, x1], or [x1, x2].

It is assumed that the stability includes a variance in frequency domain, and frequency domain resources are divided according to a sub-band. If beam quality of each sub-band of the target beam is denoted as x1 and x2..., the variance in frequency domain is a variance of beam quality of a plurality of sub-bands.

Optionally, in some embodiments, the inputting the beam measurement result into an artificial intelligence AI network includes:
inputting target information into the AI network, where
the target information includes at least one of the following:
   an RS identifier used for the first beam measurement report;
   beam quality corresponding to the RS identifier used for the first beam measurement report; and
   beam quality of a sub-band.

Further, in some embodiments, RS identifiers and beam quality in a beam report in a past period of time may be used as inputs of the AI network. In this way, beam quality prediction can be better performed. For example, the target information further includes at least one of the following:
first information in a third beam measurement report;
an RS identifier included in the third beam measurement report; and
beam quality corresponding to the RS identifier included in the third beam measurement report, where
the third beam measurement report is a beam measurement report within K time units from a current moment, and K is a positive integer.

Optionally, in some embodiments, the target object represented by the first information may be determined according to an indication of a network device, a protocol stipulation, or a target configuration reported by a terminal. That is, in this embodiment of this application, the method further includes:
determining the target object according to an indication of a network device, a protocol stipulation, or a target configuration reported by a terminal.

In an embodiment, the target configuration may indicate that the first information represents a combination of one or more objects in the target object. For example, the target configuration indicates that the second device may obtain beam quality of a sub-band by using the first information, and also represents future beam quality.

Further, the target configuration may be further used to determine a specific parameter of the target object. For example, for beam quality of a sub-band, whether the sub-band is in time domain or frequency domain or both time domain and frequency domain, the sub-band has a division manner of the sub-band and a resource size included in the sub-band.

For example, for quality of beam that is not reported, a specific definition of the beam that is not reported, for example, whether the beam quality is an average of all beam quality or quality of a single beam, is represented.

Optionally, a manner of determining, based on the target configuration, the target object represented by the first information may be set according to an actual requirement. For example, one of the following cases may be included:
Case 1: The protocol specifies that the first information represents one configuration, that is, the target configuration.
Case 2: The protocol specifies that the first information represents M configurations. The terminal reports N configurations in the M configurations. Finally, the network device configures one configuration, that is, the target configuration, by using signaling such as RRC or a MAC CE.
Case 3: The protocol specifies that the first information represents M configurations. The terminal reports N configurations in the M configurations. The network device configures L configurations in the N configuration, and finally activates one of the configurations, that is, the target configuration.
Case 4: The protocol specifies that the first information represents M configurations, and only one configuration, that is, the target configuration, is reported.
Case 5: The protocol specifies that the first information represents M configurations. The network device configures one configuration, that is, the target configuration.
Case 6: The protocol specifies that the first information represents M configurations. The network device configures L configurations, and finally activates one configuration, that is, the target configuration.
Case 7: The protocol specifies that the first information represents M configurations. The network device configures L configurations, and when the terminal reports a beam report, it indicates the beam report includes which configuration, that is, the target configuration.

It should be understood that signaling configured/activated by the network is associated with at least one of the following:
a beam report related configuration; and
an upper layer related configuration.

The beam report related configuration includes related CSI configuration signaling, CSI report configuration signaling, and the like, for example, CSI measurement configuration signaling (CSI-MeasConfig), CSI report configuration signaling (CSI-ReportConfig), CSI resource configuration signaling (CSI-ResourceConfig), non-zero power CSI reference signal resource set signaling (NZP-CSI-RS-ResourceSet), non-zero power CSI reference signal resource signaling (NZP-CSI-RS-Resource), CSI-SSB resource set signaling (CSI-SSB-ResourceSet), SRS configuration signaling (SRS-Config), SRS resource set signaling (SRS-ResourceSet), SRS resource signaling (SRS-Resource), PDCCH configuration signaling (PDCCH-Config), PDSCH configuration signaling (PDSCH-Config), PUCCH configuration signaling (PUCCH-Config), PUSCH configuration signaling (PUSCH-Config), and associated signaling.

Upper layer related configuration signaling may include cell group configuration signaling (CellGroupConfig), special cell configuration signaling (SpCellConfig), synchronous reconfiguration signaling (ReconfigurationWithSync), serving cell common configuration signaling (ServingCellConfigCommon), serving cell configuration signaling (ServingCellConfig), and associated signaling.

Referring to FIG. 4, FIG. 4 is a flowchart of a beam information determining method according to an embodiment of this application. The method is performed by a second device. As shown in FIG. 4, the method includes the following steps.

Step 401: Receive a first beam measurement report, where the first beam measurement report includes N pieces of first information, and N is a positive integer.

Step 402: Input the N pieces of first information into an artificial intelligence AI network to obtain beam information.

Optionally, the first beam measurement report further includes at least one of the following: a reference signal RS identifier corresponding to a beam and beam quality corresponding to the RS identifier.

Optionally, the N pieces of first information meet at least one of the following:
in a case that N is equal to 1, the first information is associated with at least one RS identifier; and
in a case that N is greater than 1, each piece of first information is associated with one first RS identifier, where
the at least one RS identifier is any one of the following: at least a part of RS identifiers included in the first beam measurement report, at least a part of RS identifiers included in a beam report configuration, and at least a part of RS identifiers included in the beam measurement configuration; and the first RS identifier is any one of the following: an RS identifier included in the first beam measurement report, an RS identifier included in the beam report configuration, and an RS identifier included in the beam measurement configuration.

Optionally, different types of beam quality correspond to different AI networks.

Optionally, the first information is used to represent a target object, and the target object includes at least one of the following:
a first RS identifier;
beam quality corresponding to the first RS identifier;
predicted beam quality;
beam quality corresponding to M second RS identifiers, where the M second RS identifiers are RS identifiers whose corresponding beam quality is not reported, and M is a positive integer;
beam quality of a sub-band; and
stability of beam quality.

Optionally, the predicted beam quality includes predicted beam quality of a third RS identifier within a preset time period, and the third RS identifier includes any one of the following:
an RS identifier associated with the first information;
an RS identifier included in the first beam measurement report;
an RS identifier included in a beam configuration;
the first L1 RS identifiers that are sorted in descending order of beam quality in RS identifiers associated with the first information;
the first L1 RS identifiers that are sorted in descending order of beam quality in RS identifiers included in the first beam measurement report; and
the first L1 RS identifiers that are sorted in descending order of beam quality in RS identifiers included in the beam configuration, where
L1 is a positive integer.

Optionally, in a case that the first beam measurement report and a second beam measurement report meet a preset condition, the third RS identifier includes at least one of the following: a fourth RS identifier, a fifth RS identifier, and a sixth RS identifier, where
the second beam measurement report is a beam measurement report that is closest to the first beam measurement report;
the fourth RS identifier is only associated with first information in a target beam measurement report, and the target beam measurement report is at least one of the first beam measurement report and the second beam measurement report;
the fifth RS identifier is only an RS identifier included in the target beam measurement report, and the target beam measurement report is at least one of the first beam measurement report and the second beam measurement report; and
the sixth RS identifier is only an RS identifier included in a beam configuration corresponding to the target beam measurement report, and the target beam measurement report is at least one of the first beam measurement report and the second beam measurement report.

Optionally, the preset condition includes at least one of the following:
the RS identifier associated with the first information in the first beam measurement report is different from an RS identifier associated with first information in the second beam measurement report;
the RS identifier included in the first beam measurement report is different from an RS identifier included in the second beam measurement report; and
an RS identifier included in a beam configuration corresponding to the first beam measurement report is different from an RS identifier included in a beam configuration corresponding to the second beam measurement report.

Optionally, in a case that M is greater than 1, the beam quality corresponding to the M second RS identifiers includes any one of the following:
beam quality of each RS identifier in the M second RS identifiers;
average beam quality of all RS identifiers in the M second RS identifiers;
beam quality of each RS identifier in L2 RS identifiers, where the L2 RS identifiers are the first L2 RS identifiers that are sorted in descending order of beam quality in the M second RS identifiers, and L2 is a positive integer;
average beam quality of the L2 RS identifiers;
beam quality of each RS identifier in L3 RS identifiers, where the L3 RS identifiers are the first L3 RS identifiers that are sorted in descending order of beam quality in the M second RS identifiers, beam quality of each RS identifier in the L3 RS identifiers is greater than a first preset threshold, and L3 is a positive integer;
average beam quality of the L3 identifiers;
beam quality of each identifier in at least one target RS identifier; and
average beam quality of the at least one target RS identifier.

Optionally, the at least one target RS meets at least one of the following:
in a case that beam quality of L4 RS identifiers in the second RS identifier is greater than a second preset threshold, the at least one target RS is the L4 RS identifiers;
in a case that the beam quality of the L4 RS identifiers in the second RS identifier is greater than the second preset threshold, the at least one target RS is the first L5 RS identifiers that are sorted in descending order of beam quality in the L4 RS identifiers; and
in a case that beam quality of any RS identifier in the second RS identifier is less than or equal to the second preset threshold, the at least one target RS is the first L6 RS identifiers that are sorted in descending order of beam quality in the M second RS identifiers, where
L4, L5, and L6 are all positive integers.

Optionally, the stability includes at least one of the following: time domain stability, frequency domain stability, and spatial domain stability.

Optionally, the input of the AI network includes one piece of first information or the N pieces of first information.

Optionally, the input of the AI network further includes at least one of the following:
an RS identifier included in the first beam measurement report;
beam quality corresponding to the RS identifier included in the first beam measurement report;
beam quality of a sub-band;
first information in a third beam measurement report;
an RS identifier included in the third beam measurement report; and
beam quality corresponding to the RS identifier included in the third beam measurement report, where
the third beam measurement report is a beam measurement report within K time units from a current moment, and K is a positive integer.

Optionally, the method further includes:
sending indication information, where the indication information is used to indicate the target object.

It should be noted that this embodiment is used as an implementation of the second device corresponding to the embodiment shown in FIG. 2. For a specific implementation of this embodiment, refer to the related descriptions of the embodiment shown in FIG. 2. A same beneficial effect can also be achieved. To avoid repeated descriptions, details are not described again herein.

It should be noted that the beam reporting method provided in the embodiments of this application may be performed by a beam reporting apparatus, or a control module that is in the beam reporting apparatus and that is configured to perform the beam reporting method. In the embodiments of this application, that the beam reporting apparatus performs the beam reporting method is used as an example to describe the beam reporting apparatus provided in the embodiments of this application.

Referring to FIG. 5, FIG. 5 is a structural diagram of a beam reporting apparatus according to an embodiment of this application. As shown in FIG. 5, a beam reporting apparatus 500 includes:
a measurement module 501, configured to perform beam measurement according to a beam measurement configuration to obtain a beam measurement result;
a first input module 502, configured to input the beam measurement result into an artificial intelligence AI network to obtain N pieces of first information, where N is a positive integer; and
a first sending module 503, configured to send a first beam measurement report to a second device, where the first beam measurement report includes the N pieces of first information, and the first information is used to determine beam information.

Optionally, the first beam measurement report further includes at least one of the following: a reference signal RS identifier corresponding to a beam and beam quality corresponding to the RS identifier.

Optionally, the N pieces of first information meet at least one of the following:
in a case that N is equal to 1, the first information is associated with at least one RS identifier; and
in a case that N is greater than 1, each piece of first information is associated with one first RS identifier, where
the at least one RS identifier is any one of the following: at least a part of RS identifiers included in the first beam measurement report, at least a part of RS identifiers included in a beam report configuration, and at least a part of RS identifiers included in the beam measurement configuration; and the first RS identifier is any one of the following: an RS identifier included in the first beam measurement report, an RS identifier included in the beam report configuration, and an RS identifier included in the beam measurement configuration.

Optionally, different types of beam quality correspond to different AI networks.

Optionally, the first information is used to represent a target object, and the target object includes at least one of the following:
a first RS identifier;
beam quality corresponding to the first RS identifier;
predicted beam quality;
beam quality corresponding to M second RS identifiers, where the M second RS identifiers are RS identifiers whose corresponding beam quality is not reported, and M is a positive integer;
beam quality of a sub-band; and
stability of beam quality.

Optionally, the predicted beam quality includes predicted beam quality of a third RS identifier within a preset time period, and the third RS identifier includes any one of the following:
an RS identifier associated with the first information;
an RS identifier included in the first beam measurement report;
an RS identifier included in a beam configuration;
the first L1 RS identifiers that are sorted in descending order of beam quality in RS identifiers associated with the first information;
the first L1 RS identifiers that are sorted in descending order of beam quality in RS identifiers included in the first beam measurement report; and
the first L1 RS identifiers that are sorted in descending order of beam quality in RS identifiers included in the beam configuration, where
L1 is a positive integer.

Optionally, in a case that the first beam measurement report and a second beam measurement report meet a preset condition, the third RS identifier includes at least one of the following: a fourth RS identifier, a fifth RS identifier, and a sixth RS identifier, where
the second beam measurement report is a beam measurement report that is closest to the first beam measurement report;
the fourth RS identifier is only associated with first information in a target beam measurement report, and the target beam measurement report is at least one of the first beam measurement report and the second beam measurement report;
the fifth RS identifier is only an RS identifier included in the target beam measurement report, and the target beam measurement report is at least one of the first beam measurement report and the second beam measurement report; and
the sixth RS identifier is only an RS identifier included in a beam configuration corresponding to the target beam measurement report, and the target beam measurement report is at least one of the first beam measurement report and the second beam measurement report.

Optionally, the preset condition includes at least one of the following:
the RS identifier associated with the first information in the first beam measurement report is different from an RS identifier associated with first information in the second beam measurement report;
the RS identifier included in the first beam measurement report is different from an RS identifier included in the second beam measurement report; and
an RS identifier included in a beam configuration corresponding to the first beam measurement report is different from an RS identifier included in a beam configuration corresponding to the second beam measurement report.

Optionally, in a case that M is greater than 1, the beam quality corresponding to the M second RS identifiers includes any one of the following:
beam quality of each RS identifier in the M second RS identifiers;
average beam quality of all RS identifiers in the M second RS identifiers;
beam quality of each RS identifier in L2 RS identifiers, where the L2 RS identifiers are the first L2 RS identifiers that are sorted in descending order of beam quality in the M second RS identifiers, and L2 is a positive integer;
average beam quality of the L2 RS identifiers;
beam quality of each RS identifier in L3 RS identifiers, where the L3 RS identifiers are the first L3 RS identifiers that are sorted in descending order of beam quality in the M second RS identifiers, beam quality of each RS identifier in the L3 RS identifiers is greater than a first preset threshold, and L3 is a positive integer;
average beam quality of the L3 identifiers;
beam quality of each identifier in at least one target RS identifier; and
average beam quality of the at least one target RS identifier.

Optionally, the at least one target RS meets at least one of the following:
in a case that beam quality of L4 RS identifiers in the second RS identifier is greater than a second preset threshold, the at least one target RS is the L4 RS identifiers;
in a case that the beam quality of the L4 RS identifiers in the second RS identifier is greater than the second preset threshold, the at least one target RS is the first L5 RS identifiers that are sorted in descending order of beam quality in the L4 RS identifiers; and
in a case that beam quality of any RS identifier in the second RS identifier is less than or equal to the second preset threshold, the at least one target RS is the first L6 RS identifiers that are sorted in descending order of beam quality in the M second RS identifiers, where
L4, L5, and L6 are all positive integers.

Optionally, the stability includes at least one of the following: time domain stability, frequency domain stability, and spatial domain stability.

Optionally, the inputting the beam measurement result into an artificial intelligence AI network includes:
inputting target information into the AI network, where
the target information includes at least one of the following:
   an RS identifier used for the first beam measurement report;
   beam quality corresponding to the RS identifier used for the first beam measurement report; and
   beam quality of a sub-band.

Optionally, the target information further includes at least one of the following:
first information in a third beam measurement report;
an RS identifier included in the third beam measurement report; and
beam quality corresponding to the RS identifier included in the third beam measurement report, where
the third beam measurement report is a beam measurement report within K time units from a current moment, and K is a positive integer.

Optionally, the beam reporting apparatus further includes:
a determining module, configured to determine the target object according to an indication of a network device, a protocol stipulation, or a target configuration reported by a terminal.

The beam reporting apparatus provided in this embodiment of this application can implement the processes implemented by the first device in the method embodiment in FIG. 3. To avoid repetition, details are not described herein again.

It should be noted that, the beam information determining method provided in the embodiments of this application may be performed by a beam information determining apparatus, or a control module that is in the beam information determining apparatus and that is configured to perform the beam information determining method. In the embodiments of this application, that the beam information determining apparatus performs the beam information determining method is used as an example to describe the beam information determining apparatus provided in the embodiments of this application.

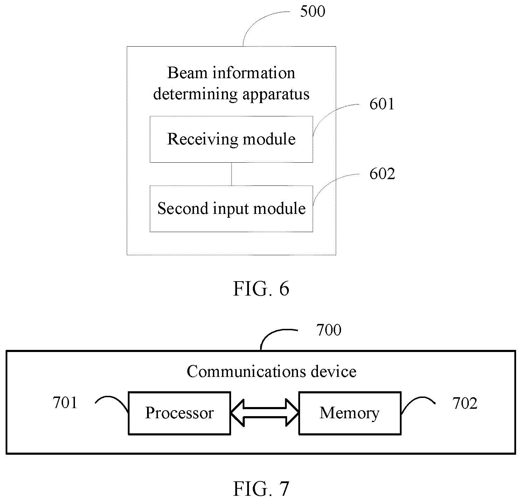

Referring to FIG. 6, FIG. 6 is a structural diagram of a beam information determining apparatus according to an embodiment of this application. As shown in FIG. 6, a beam information determining apparatus 600 includes:
a receiving module 601, configured to receive a first beam measurement report, where the first beam measurement report includes N pieces of first information, and N is a positive integer; and
a second input module 602, configured to input the N pieces of first information into an artificial intelligence AI network to obtain beam information.

Optionally, the first beam measurement report further includes at least one of the following: a reference signal RS identifier corresponding to a beam and beam quality corresponding to the RS identifier.

Optionally, the N pieces of first information meet at least one of the following:
in a case that N is equal to 1, the first information is associated with at least one RS identifier; and
in a case that N is greater than 1, each piece of first information is associated with one first RS identifier, where
the at least one RS identifier is any one of the following: at least a part of RS identifiers included in the first beam measurement report, at least a part of RS identifiers included in a beam report configuration, and at least a part of RS identifiers included in the beam measurement configuration; and the first RS identifier is any one of the following: an RS identifier included in the first beam measurement report, an RS identifier included in the beam report configuration, and an RS identifier included in the beam measurement configuration.

Optionally, different types of beam quality correspond to different AI networks.

Optionally, the first information is used to represent a target object, and the target object includes at least one of the following:
a first RS identifier;
beam quality corresponding to the first RS identifier;
predicted beam quality;
beam quality corresponding to M second RS identifiers, where the M second RS identifiers are RS identifiers whose corresponding beam quality is not reported, and M is a positive integer;
beam quality of a sub-band; and
stability of beam quality.

Optionally, the predicted beam quality includes predicted beam quality of a third RS identifier within a preset time period, and the third RS identifier includes any one of the following:
an RS identifier associated with the first information;
an RS identifier included in the first beam measurement report;
an RS identifier included in a beam configuration;
the first L1 RS identifiers that are sorted in descending order of beam quality in RS identifiers associated with the first information;
the first L1 RS identifiers that are sorted in descending order of beam quality in RS identifiers included in the first beam measurement report; and
the first L1 RS identifiers that are sorted in descending order of beam quality in RS identifiers included in the beam configuration, where
L1 is a positive integer.

Optionally, in a case that the first beam measurement report and a second beam measurement report meet a preset condition, the third RS identifier includes at least one of the following: a fourth RS identifier, a fifth RS identifier, and a sixth RS identifier, where
the second beam measurement report is a beam measurement report that is closest to the first beam measurement report;
the fourth RS identifier is only associated with first information in a target beam measurement report, and the target beam measurement report is at least one of the first beam measurement report and the second beam measurement report;
the fifth RS identifier is only an RS identifier included in the target beam measurement report, and the target beam measurement report is at least one of the first beam measurement report and the second beam measurement report; and
the sixth RS identifier is only an RS identifier included in a beam configuration corresponding to the target beam measurement report, and the target beam measurement report is at least one of the first beam measurement report and the second beam measurement report.

Optionally, the preset condition includes at least one of the following:
the RS identifier associated with the first information in the first beam measurement report is different from an RS identifier associated with first information in the second beam measurement report;
the RS identifier included in the first beam measurement report is different from an RS identifier included in the second beam measurement report; and
an RS identifier included in a beam configuration corresponding to the first beam measurement report is different from an RS identifier included in a beam configuration corresponding to the second beam measurement report.

Optionally, in a case that M is greater than 1, the beam quality corresponding to the M second RS identifiers includes any one of the following:
beam quality of each RS identifier in the M second RS identifiers;
average beam quality of all RS identifiers in the M second RS identifiers;
beam quality of each RS identifier in L2 RS identifiers, where the L2 RS identifiers are the first L2 RS identifiers that are sorted in descending order of beam quality in the M second RS identifiers, and L2 is a positive integer;
average beam quality of the L2 RS identifiers;
beam quality of each RS identifier in L3 RS identifiers, where the L3 RS identifiers are the first L3 RS identifiers that are sorted in descending order of beam quality in the M second RS identifiers, beam quality of each RS identifier in the L3 RS identifiers is greater than a first preset threshold, and L3 is a positive integer;
average beam quality of the L3 identifiers;
beam quality of each identifier in at least one target RS identifier; and
average beam quality of the at least one target RS identifier.

Optionally, the at least one target RS meets at least one of the following:
in a case that beam quality of L4 RS identifiers in the second RS identifier is greater than a second preset threshold, the at least one target RS is the L4 RS identifiers;
in a case that the beam quality of the L4 RS identifiers in the second RS identifier is greater than the second preset threshold, the at least one target RS is the first L5 RS identifiers that are sorted in descending order of beam quality in the L4 RS identifiers; and
in a case that beam quality of any RS identifier in the second RS identifier is less than or equal to the second preset threshold, the at least one target RS is the first L6 RS identifiers that are sorted in descending order of beam quality in the M second RS identifiers, where
L4, L5, and L6 are all positive integers.

Optionally, the stability includes at least one of the following: time domain stability, frequency domain stability, and spatial domain stability.

Optionally, the input of the AI network includes one piece of first information or the N pieces of first information.

Optionally, the input of the AI network further includes at least one of the following:
an RS identifier included in the first beam measurement report;
beam quality corresponding to the RS identifier included in the first beam measurement report;
beam quality of a sub-band;
first information in a third beam measurement report;
an RS identifier included in the third beam measurement report; and
beam quality corresponding to the RS identifier included in the third beam measurement report, where
the third beam measurement report is a beam measurement report within K time units from a current moment, and K is a positive integer.

Optionally, the beam information determining apparatus further includes:
a second sending module, configured to send indication information, where the indication information is used to indicate the target object.

The beam information determining apparatus provided in this embodiment of this application can implement the processes implemented by the second device in the method embodiment in FIG. 4. To avoid repetition, details are not described herein again.

The beam reporting apparatus or the beam information determining apparatus in the embodiments of this application may be an apparatus, or may be a component, an integrated circuit, or a chip in a terminal. The apparatus may be a mobile terminal, or a non-mobile terminal. For example, the mobile device may include but is not limited to the types of the terminal 11 listed above, and the non-mobile terminal may be a server, a network attached storage (Network Attached Storage, NAS), a personal computer (personal computer, PC), a television (television, TV), an automated teller machine, or a self-service machine. This is not specifically limited in the embodiments of this application.

The beam reporting apparatus or the beam information determining apparatus in the embodiments of this application may be an apparatus with an operating system. The operating system may be an Android (Android) operating system, an iOS operating system, or another possible operating system. This is not specifically limited in this embodiment of this application.

The beam reporting apparatus and the beam information determining apparatus provided in the embodiments of this application can implement the processes implemented in the method embodiments in FIG. 3 to FIG. 4, and achieve a same technical effect. To avoid repetition, details are not described herein again.

Optionally, as shown in FIG. 7, an embodiment of this application further provides a communications device 700, including a processor 701, a memory 702, and a program or an instruction that is stored in the memory 702 and executable on the processor 701. For example, when the communications device 700 is a first device, the program or the instruction is executed by the processor 701 to implement the processes of the foregoing beam reporting method embodiment, and a same technical effect can be achieved. When the communications device 700 is a second device, the program or the instruction is executed by the processor 701 to implement the processes of the foregoing beam information determining method embodiment, and a same technical effect can be achieved. To avoid repetition, details are not described herein again.

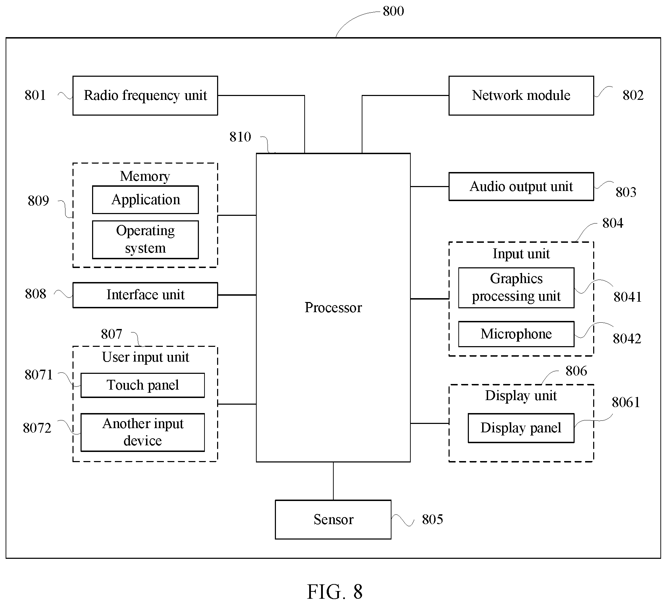

FIG. 8 is a schematic structural diagram of hardware of a terminal according to the embodiments of this application.

A terminal 800 includes but is not limited to components such as a radio frequency unit 801, a network module 802, an audio output unit 803, an input unit 804, a sensor 805, a display unit 806, a user input unit 807, an interface unit 808, a memory 809, and a processor 810.

A person skilled in the art can understand that the terminal 800 may further include a power supply (such as a battery) that supplies power to each component. The power supply may be logically connected to the processor 810 by using a power supply management system, to implement functions such as charging and discharging management, and power consumption management by using the power supply management system. The terminal structure shown in FIG. 8 constitutes no limitation on the terminal, and the terminal may include more or fewer components than those shown in the figure, or combine some components, or have different component arrangements. Details are not described herein.

It should be understood that, in this embodiment of this application, the input unit 804 may include a graphics processing unit (Graphics Processing Unit, GPU) 8041 and a microphone 8042, and the graphics processing unit 8041 processes image data of a still picture or a video obtained by an image capture apparatus (such as a camera) in a video capture mode or an image capture mode. The display unit 806 may include a display panel 8061. Optionally, the display panel 8061 may be configured in a form such as a liquid crystal display or an organic light-emitting diode. The user input unit 807 includes a touch panel 8071 and another input device 8072. The touch panel 8071 is also referred to as a touchscreen. The touch panel 8071 may include two parts: a touch detection apparatus and a touch controller. The another input device 8072 may include but is not limited to a physical keyboard, a functional button (such as a volume control button or a power on/off button), a trackball, a mouse, and a joystick. Details are not described herein.

In this embodiment of this application, the radio frequency unit 801 receives downlink data from a network side device and then sends the downlink data to the processor 810 for processing; and sends uplink data to the network device. Usually, the radio frequency unit 801 includes but is not limited to an antenna, at least one amplifier, a transceiver, a coupler, a low noise amplifier, a duplexer, and the like.

The memory 809 may be configured to store a software program or an instruction and various data. The memory 109 may mainly include a program or instruction storage area and a data storage area. The program or instruction storage area may store an operating system, and an application or an instruction required by at least one function (for example, a sound playing function or an image playing function). In addition, the memory 809 may include a high-speed random access memory, and may further include a non-volatile memory. The non-volatile memory may be a read-only memory (Read-only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-volatile solid-state storage component.

The processor 810 may include one or more processing units. Optionally, an application processor and a modem processor may be integrated into the processor 810. The application processor mainly processes an operating system, a user interface, an application, an instruction, or the like. The modem processor mainly processes wireless communications, for example, a baseband processor. It can be understood that, alternatively, the modem processor may not be integrated into the processor 810.

The processor 810 is configured to: perform beam measurement according to a beam measurement configuration to obtain a beam measurement result; and input the beam measurement result into an artificial intelligence AI network to obtain N pieces of first information, where N is a positive integer; and
the radio frequency unit 801 is configured to send a first beam measurement report to a second device, where the first beam measurement report includes the N pieces of first information, and the first information is used to determine beam information.

Alternatively,
the radio frequency unit 801 is configured to receive a first beam measurement report, where the first beam measurement report includes N pieces of first information, and N is a positive integer; and
the processor 810 is configured to input the N pieces of first information into an artificial intelligence AI network to obtain beam information.

It should be understood that, in this embodiment, the processor 810 and the radio frequency unit 801 can implement the processes in the method embodiment in FIG. 3 or FIG. 4. To avoid repetition, details are not described herein again.

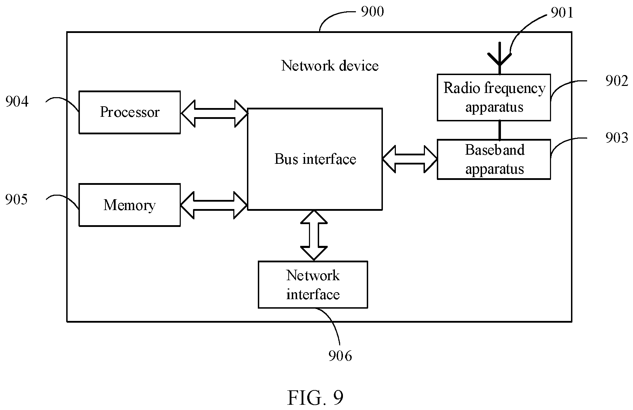

Specifically, an embodiment of this application further provides a network side device. As shown in FIG. 9, a network device 900 includes an antenna 901, a radio frequency apparatus 902, and a baseband apparatus 903. The antenna 901 is connected to the radio frequency apparatus 902. In an uplink direction, the radio frequency apparatus 902 receives information by using the antenna 901, and sends the received information to the baseband apparatus 903 for processing. In a downlink direction, the baseband apparatus 903 processes information that needs to be sent, and sends processed information to the radio frequency apparatus 902. The radio frequency apparatus 902 processes the received information, and sends processed information by using the antenna 901.

The frequency band processing apparatus may be located in the baseband apparatus 903. The method performed by the network side device in the foregoing embodiment may be implemented in the baseband apparatus 903. The baseband apparatus 903 includes a processor 904 and a memory 905.

The baseband apparatus 903 may include, for example, at least one baseband board, where a plurality of chips are disposed on the baseband board. As shown in FIG. 9, one chip is, for example, the processor 904, which is connected to the memory 905, so as to invoke a program in the memory 905 to perform operations of the network device shown in the foregoing method embodiment.

The baseband apparatus 903 may further include a network interface 906, configured to exchange information with the radio frequency apparatus 902. For example, the interface is a common public radio interface (common public radio interface, CPRI for short).

Specifically, the network side device in this embodiment of this application further includes an instruction or a program that is stored in the memory 905 and executable on the processor 904. The processor 904 invokes the instruction or the program in the memory 905 to perform the method performed by the modules shown in FIG. 5 or FIG. 6, and a same technical effect is achieved. To avoid repetition, details are not described herein again.

An embodiment of this application further provides a readable storage medium. The readable storage medium stores a program or an instruction, and when the program or the instruction is executed by a processor, the processes of the foregoing beam reporting method or beam information determining method embodiment are implemented and a same technical effect can be achieved. To avoid repetition, details are not described herein again.

The processor is a processor in the electronic device in the foregoing embodiment. The readable storage medium includes a computer-readable storage medium, such as a computer read-only memory (Read-only Memory, ROM), a random access memory (Random Access Memory, RAM), a magnetic disk, or an optical disc.

An embodiment of this application further provides a chip. The chip includes a processor and a communications interface, the communications interface is coupled to the processor, and the processor is configured to run a program or an instruction of a network device to implement the processes of the foregoing beam reporting method or beam information determining method embodiment and a same technical effect can be achieved. To avoid repetition, details are not described herein again.

It should be understood that the chip mentioned in this embodiment of this application may also be referred to as a system-level chip, a system chip, a chip system, or an on-chip system chip.

An embodiment of this application further provides a computer program product. The computer program product is stored in a non-volatile storage medium, and the computer program product is executed by at least one processor to implement the processes of the foregoing beam reporting method or beam information determining method embodiment, and a same technical effect can be achieved. To avoid repetition, details are not described herein again.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a base station, or the like) to perform the methods described in the embodiments of this application .

A person of ordinary skill in the art may be aware that, in combination with the examples described in the embodiments disclosed in this specification, units and algorithm steps may be implemented by using electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of the present disclosure.

It can be clearly understood by a person skilled in the art that, for the purpose of convenient and brief description, for a detailed operating process of the foregoing system, apparatus, and unit, refer to a corresponding process in the foregoing method embodiments. Details are not described herein again.

In the embodiments provided in this application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in the embodiments.

In addition, functional units in the embodiments of the present disclosure may be integrated into one processing unit, or each of the units may exist alone physically, or two or more units are integrated into one unit.

When the functions are implemented in a form of a software functional unit and sold or used as an independent product, the functions may be stored in a computer readable storage medium. Based on such an understanding, the technical solutions of the present disclosure essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of the present disclosure. The foregoing storage medium includes: any medium that can store program code, such as a USB flash drive, a removable hard disk, a ROM, a RAM, a magnetic disk, or an optical disc.

A person of ordinary skill in the art may understand that all or some of the processes of the methods in the embodiments may be implemented by a computer program controlling related hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A beam reporting method, performed by a first device and comprising:
performing beam measurement according to a beam measurement configuration to obtain a beam measurement result;
inputting the beam measurement result into an artificial intelligence AI network to obtain N pieces of first information, wherein N is a positive integer; and
sending a first beam measurement report to a second device, wherein the first beam measurement report comprises the N pieces of first information, and a first information is used to determine beam information.

2. The method according to claim 1, wherein the first beam measurement report further comprises at least one of the following: a reference signal RS identifier corresponding to a beam and beam quality corresponding to the RS identifier.

3. The method according to claim 1, wherein the N pieces of first information meet at least one of the following:
in a case that N is equal to 1, the first information is associated with at least one RS identifier; and
in a case that N is greater than 1, each piece of first information is associated with one first RS identifier, wherein
the at least one RS identifier is any one of the following: at least a part of RS identifiers comprised in the first beam measurement report, at least a part of RS identifiers comprised in a beam report configuration, and at least a part of RS identifiers comprised in the beam measurement configuration; and the first RS identifier is any one of the following: an RS identifier comprised in the first beam measurement report, an RS identifier comprised in the beam report configuration, and an RS identifier comprised in the beam measurement configuration.

4. The method according to claim 1, wherein different types of beam quality correspond to different AI networks.

5. The method according to claim 1, wherein the first information is used to represent a target object, and the target object comprises at least one of the following:
a first RS identifier;
beam quality corresponding to the first RS identifier;
predicted beam quality;
beam quality corresponding to M second RS identifiers, wherein the M second RS identifiers are RS identifiers whose corresponding beam quality is not reported, and M is a positive integer;
beam quality of a sub-band; and
stability of beam quality.

6. The method according to claim 5, wherein the predicted beam quality comprises predicted beam quality of a third RS identifier within a preset time period, and the third RS identifier comprises any one of the following:
an RS identifier associated with the first information;
an RS identifier comprised in the first beam measurement report;
an RS identifier comprised in a beam configuration;
the first L1 RS identifiers that are sorted in descending order of beam quality in RS identifiers associated with the first information;
the first L1 RS identifiers that are sorted in descending order of beam quality in RS identifiers comprised in the first beam measurement report; and
the first L1 RS identifiers that are sorted in descending order of beam quality in RS identifiers comprised in the beam configuration, wherein
L1 is a positive integer.

7. The method according to claim 6, wherein in a case that the first beam measurement report and a second beam measurement report meet a preset condition, the third RS identifier comprises at least one of the following: a fourth RS identifier, a fifth RS identifier, and a sixth RS identifier, wherein
the second beam measurement report is a beam measurement report that is closest to the first beam measurement report;
the fourth RS identifier is only associated with first information in a target beam measurement report, and the target beam measurement report is at least one of the first beam measurement report and the second beam measurement report;
the fifth RS identifier is only an RS identifier comprised in the target beam measurement report, and the target beam measurement report is at least one of the first beam measurement report and the second beam measurement report; and
the sixth RS identifier is only an RS identifier comprised in a beam configuration corresponding to the target beam measurement report, and the target beam measurement report is at least one of the first beam measurement report and the second beam measurement report.

8. The method according to claim 7, wherein the preset condition comprises at least one of the following:
the RS identifier associated with the first information in the first beam measurement report is different from an RS identifier associated with first information in the second beam measurement report;
the RS identifier comprised in the first beam measurement report is different from an RS identifier comprised in the second beam measurement report; and
an RS identifier comprised in a beam configuration corresponding to the first beam measurement report is different from an RS identifier comprised in a beam configuration corresponding to the second beam measurement report.

9. The method according to claim 5, wherein in a case that M is greater than 1, the beam quality corresponding to the M second RS identifiers comprises any one of the following:
beam quality of each RS identifier in the M second RS identifiers;
average beam quality of all RS identifiers in the M second RS identifiers;
beam quality of each RS identifier in L2 RS identifiers, wherein the L2 RS identifiers are the first L2 RS identifiers that are sorted in descending order of beam quality in the M second RS identifiers, and L2 is a positive integer;
average beam quality of the L2 RS identifiers;
beam quality of each RS identifier in L3 RS identifiers, wherein the L3 RS identifiers are the first L3 RS identifiers that are sorted in descending order of beam quality in the M second RS identifiers, beam quality of each RS identifier in the L3 RS identifiers is greater than a first preset threshold, and L3 is a positive integer;
average beam quality of the L3 identifiers;
beam quality of each identifier in at least one target RS identifier; and
average beam quality of the at least one target RS identifier.

10. The method according to claim 9, wherein the at least one target RS identifier meets at least one of the following:
in a case that beam quality of L4 RS identifiers in the second RS identifier is greater than a second preset threshold, the at least one target RS is the L4 RS identifiers;
in a case that the beam quality of the L4 RS identifiers in the second RS identifier is greater than the second preset threshold, the at least one target RS is the first L5 RS identifiers that are sorted in descending order of beam quality in the L4 RS identifiers; and
in a case that beam quality of any RS identifier in the second RS identifier is less than or equal to the second preset threshold, the at least one target RS is the first L6 RS identifiers that are sorted in descending order of beam quality in the M second RS identifiers, whereinL4, L5, and L6 are all positive integers.

11. The method according to claim 5, wherein the stability comprises at least one of the following: time domain stability, frequency domain stability, and spatial domain stability.

12. The method according to claim 1, wherein the inputting the beam measurement result into an artificial intelligence AI network comprises:
inputting target information into the AI network, wherein
the target information comprises at least one of the following:
an RS identifier used for the first beam measurement report;
beam quality corresponding to the RS identifier used for the first beam measurement report; and
beam quality of a sub-band.

13. The method according to claim 12, wherein the target information further comprises at least one of the following:
first information in a third beam measurement report;
an RS identifier comprised in the third beam measurement report; and
beam quality corresponding to the RS identifier comprised in the third beam measurement report, wherein
the third beam measurement report is a beam measurement report within K time units from a current moment, and K is a positive integer.

14. The method according to claim 5, wherein the method further comprises:
determining the target object according to an indication of a network device, a protocol stipulation, or a target configuration reported by a terminal.

15. A beam information determining method, performed by a second device and comprising:
receiving a first beam measurement report, wherein the first beam measurement report comprises N pieces of first information, and N is a positive integer; and
inputting the N pieces of first information into an artificial intelligence AI network to obtain beam information.

16. The method according to claim 15, wherein the first beam measurement report further comprises at least one of the following: a reference signal RS identifier corresponding to a beam and beam quality corresponding to the RS identifier.

17. The method according to claim 15, wherein the N pieces of first information meet at least one of the following:
in a case that N is equal to 1, the first information is associated with at least one RS identifier; and
in a case that N is greater than 1, each piece of first information is associated with one first RS identifier, wherein
the at least one RS identifier is any one of the following: at least a part of RS identifiers comprised in the first beam measurement report, at least a part of RS identifiers comprised in a beam report configuration, and at least a part of RS identifiers comprised in the beam measurement configuration; and the first RS identifier is any one of the following: an RS identifier comprised in the first beam measurement report, an RS identifier comprised in the beam report configuration, and an RS identifier comprised in the beam measurement configuration.

18. The method according to claim 15, wherein different types of beam quality correspond to different AI networks.

19. The method according to claim 15, wherein the first information is used to represent a target object, and the target object comprises at least one of the following:
a first RS identifier;
beam quality corresponding to the first RS identifier;
predicted beam quality;
beam quality corresponding to M second RS identifiers, wherein the M second RS identifiers are RS identifiers whose corresponding beam quality is not reported, and M is a positive integer;
beam quality of a sub-band; and
stability of beam quality.

20. The method according to claim 19, wherein the predicted beam quality comprises predicted beam quality of a third RS identifier within a preset time period, and the third RS identifier comprises any one of the following:
an RS identifier associated with the first information;
an RS identifier comprised in the first beam measurement report;
an RS identifier comprised in a beam configuration;
the first L1 RS identifiers that are sorted in descending order of beam quality in RS identifiers associated with the first information;
the first L1 RS identifiers that are sorted in descending order of beam quality in RS identifiers comprised in the first beam measurement report; and
the first L1 RS identifiers that are sorted in descending order of beam quality in RS identifiers comprised in the beam configuration, wherein
L1 is a positive integer.

21. The method according to claim 20, wherein in a case that the first beam measurement report and a second beam measurement report meet a preset condition, the third RS identifier comprises at least one of the following: a fourth RS identifier, a fifth RS identifier, and a sixth RS identifier, wherein
the second beam measurement report is a beam measurement report that is closest to the first beam measurement report;
the fourth RS identifier is only associated with first information in a target beam measurement report, and the target beam measurement report is at least one of the first beam measurement report and the second beam measurement report;
the fifth RS identifier is only an RS identifier comprised in the target beam measurement report, and the target beam measurement report is at least one of the first beam measurement report and the second beam measurement report; and
the sixth RS identifier is only an RS identifier comprised in a beam configuration corresponding to the target beam measurement report, and the target beam measurement report is at least one of the first beam measurement report and the second beam measurement report.

22. The method according to claim 21, wherein the preset condition comprises at least one of the following:
the RS identifier associated with the first information in the first beam measurement report is different from an RS identifier associated with first information in the second beam measurement report;
the RS identifier comprised in the first beam measurement report is different from an RS identifier comprised in the second beam measurement report; and
an RS identifier comprised in a beam configuration corresponding to the first beam measurement report is different from an RS identifier comprised in a beam configuration corresponding to the second beam measurement report.

23. The method according to claim 19, wherein in a case that M is greater than 1, the beam quality corresponding to the M second RS identifiers comprises any one of the following:
beam quality of each RS identifier in the M second RS identifiers;
average beam quality of all RS identifiers in the M second RS identifiers;
beam quality of each RS identifier in L2 RS identifiers, wherein the L2 RS identifiers are the first L2 RS identifiers that are sorted in descending order of beam quality in the M second RS identifiers, and L2 is a positive integer;
average beam quality of the L2 RS identifiers;
beam quality of each RS identifier in L3 RS identifiers, wherein the L3 RS identifiers are the first L3 RS identifiers that are sorted in descending order of beam quality in the M second RS identifiers, beam quality of each RS identifier in the L3 RS identifiers is greater than a first preset threshold, and L3 is a positive integer;
average beam quality of the L3 identifiers;
beam quality of each identifier in at least one target RS identifier; and
average beam quality of the at least one target RS identifier.

24. The method according to claim 23, wherein the at least one target RS identifier meets at least one of the following:
in a case that beam quality of L4 RS identifiers in the second RS identifier is greater than a second preset threshold, the at least one target RS is the L4 RS identifiers;
in a case that the beam quality of the L4 RS identifiers in the second RS identifier is greater than the second preset threshold, the at least one target RS is the first L5 RS identifiers that are sorted in descending order of beam quality in the L4 RS identifiers; and
in a case that beam quality of any RS identifier in the second RS identifier is less than or equal to the second preset threshold, the at least one target RS is the first L6 RS identifiers that are sorted in descending order of beam quality in the M second RS identifiers, wherein
L4, L5, and L6 are all positive integers.

25. The method according to claim 19, wherein the stability comprises at least one of the following: time domain stability, frequency domain stability, and spatial domain stability.

26. The method according to claim 15, wherein the input of the AI network comprises one piece of first information or the N pieces of first information.

27. The method according to claim 26, wherein the input of the AI network further comprises at least one of the following:
an RS identifier comprised in the first beam measurement report;
beam quality corresponding to the RS identifier comprised in the first beam measurement report;
beam quality of a sub-band;
first information in a third beam measurement report;
an RS identifier comprised in the third beam measurement report; and
beam quality corresponding to the RS identifier comprised in the third beam measurement report, wherein
the third beam measurement report is a beam measurement report within K time units from a current moment, and K is a positive integer.

28. The method according to claim 19, wherein the method further comprises:
sending indication information, wherein the indication information is used to indicate the target object.

29. A beam reporting apparatus, comprising:
a measurement module, configured to perform beam measurement according to a beam measurement configuration to obtain a beam measurement result;
a first input module, configured to input the beam measurement result into an artificial intelligence AI network to obtain N pieces of first information, wherein N is a positive integer; and
a first sending module, configured to send a first beam measurement report to a second device, wherein the first beam measurement report comprises the N pieces of first information, and the first information is used to determine beam information.

30. The apparatus according to claim 29, wherein the first information is used to represent a target object, and the target object comprises at least one of the following:
a first RS identifier;
beam quality corresponding to the first RS identifier;
predicted beam quality;
beam quality corresponding to M second RS identifiers, wherein the M second RS identifiers are RS identifiers whose corresponding beam quality is not reported, and M is a positive integer;
beam quality of a sub-band; and
stability of beam quality.

31. A beam information determining apparatus, comprising:
a receiving module, configured to receive a first beam measurement report, wherein the first beam measurement report comprises N pieces of first information, and N is a positive integer; and
a second input module, configured to input the N pieces of first information into an artificial intelligence AI network to obtain beam information.

32. The apparatus according to claim 31, wherein the first information is used to represent a target object, and the target object comprises at least one of the following:
a first RS identifier;
beam quality corresponding to the first RS identifier;
predicted beam quality;
beam quality corresponding to M second RS identifiers, wherein the M second RS identifiers are RS identifiers whose corresponding beam quality is not reported, and M is a positive integer;
beam quality of a sub-band; and
stability of beam quality.

33. A communications device, comprising a memory, a processor, and a program or an instruction that is stored in the memory and executable on the processor, wherein the program or the instruction is executed by the processor to implement the steps of the beam reporting method according to any one of claims 1 to 14, or the program or the instruction is executed by the processor to implement the steps of the beam information determining method according to any one of claims 15 to 28.

34. A readable storage medium, wherein the readable storage medium stores a program or an instruction, and the program or the instruction is executed by a processor to implement the steps of the beam reporting method according to any one of claims 1 to 14, or the program or the instruction is executed by a processor to implement the steps of the beam information determining method according to any one of claims 15 to 28.

35. A chip, comprising a processor and a communications interface, wherein the communications interface is coupled to the processor, and the processor is configured to run a program or an instruction to implement the steps of the beam reporting method according to any one of claims 1 to 14 or the steps of the beam information determining method according to any one of claims 15 to 28.

36. A computer program product, wherein the computer program product is stored in a non-volatile storage medium, and the computer program product is executed by at least one processor to implement the steps of the beam reporting method according to any one of claims 1 to 14 or the steps of the beam information determining method according to any one of claims 15 to 28.
